Europäisches Patentamt

European Patent Office

Office européen des brevets

(19)

(11) **EP 0 657 837 B1**

(12) **FASCICULE DE BREVET EUROPEEN**

(45) Date de publication et mention
de la délivrance du brevet:
**17.10.2001 Bulletin 2001/42**

(51) Int Cl.⁷: **G06K 7/10**, G06K 9/20

(21) Numéro de dépôt: **94402859.6**

(22) Date de dépôt: **12.12.1994**

(54) **Procédé et dispositif d'étalonnage d'un détecteur d'images pourvu de moyens de compensation de ses signaux de sortie**

Verfahren und Vorrichtung zum Kalibrieren eines Bilddetektors mit Ausgabesignalkompensationsmitteln

Method and device for calibrating an image detector having means for output signal compensation

(84) Etats contractants désignés:
**AT BE CH DE DK ES FR GB GR IE IT LI LU MC NL PT SE**

(30) Priorité: **13.12.1993 FR 9314937**

(43) Date de publication de la demande:
**14.06.1995 Bulletin 1995/24**

(73) Titulaire: **INTERNATIONALE DES JEUX
F-92643 Boulogne Billancourt Cédex (FR)**

(72) Inventeurs:
• **Gatto, Jean-Marie
F-75016 Paris (FR)**
• **Bertrand, Dominique
F-75017 Paris (FR)**

(74) Mandataire: **Obolensky, Michel et al
c/o CABINET LAVOIX
2, place d'Estienne d'Orves
75441 Paris Cédex 09 (FR)**

(56) Documents cités:
**EP-A- 0 636 995        GB-A- 2 098 774**

• **PATENT ABSTRACTS OF JAPAN vol. 10 no. 347 (E-456) ,21 Novembre 1986 & JP-A-61 147666 (TOSHIBA CORP.) 5 Juillet 1986,**
• **IBM TECHNICAL DISCLOSURE BULLETIN., vol. 21, no.5, Octobre 1978 NEW YORK US, pages 1840-1842, R. L. MALAMUD 'ANALOG ILLUMINATION COMPENSATION'**
• **PATENT ABSTRACTS OF JAPAN vol. 10 no. 205 (E-420) ,17 Juillet 1986 & JP-A-61 048270 (NEC CORP) 8 Mars 1986,**

## Description

La présente invention est relative aux dispositifs d'analyse de supports d'informations et se rapporte plus particulièrement mais non exclusivement à de tels dispositifs utilisés pour la lecture de bulletins ou de reçus de jeux dans les terminaux de prise de jeux tels que les jeux de loterie, de loto, de paris mutuels ou autres.

On a décrit dans EP 0636995 publié le 1$^{er}$ février 1995 appartenant à l'état de la technique visé, par l'article 54(3) CBE, un dispositif d'analyse de supports d'informations comprenant un détecteur d'images comportant dans son boîtier une série de sources lumineuses d'éclairement d'un support d'informations présenté au dispositif, à chacune desquelles est associé un élément photo-sensible, de réception de la lumière de la source correspondante réfléchie par le support, les sources lumineuses et les éléments photo-sensibles étant disposés en deux rangées suivant la longueur du détecteur d'images, le dispositif comprenant en outre une source de tension de seuil et des moyens de comparaison des signaux de sortie de chacun des éléments photo-sensibles à la tension de seuil de ladite source.

Ce dispositif est caractérisé en ce qu'il comporte de plus des moyens de compensation pour faire varier au moins l'un des paramètres comprenant la tension de sortie de chaque élément photo-sensible, la tension de seuil et l'intensité du signal lumineux émis par la source associée pour obtenir une réponse uniforme de tous les éléments photo-sensibles du dispositif.

L'invention vise à créer un procédé d'étalonnage automatique d'un dispositif d'analyse du type précité qui permette de rendre utilisables des détecteurs d'images qui par construction présentent des différences de performances importantes susceptibles de provoquer, d'un détecteur à l'autre, des irrégularités de réponse qui risquent de fausser l'interprétation des signaux de sortie du capteur par les éléments d'un dispositif auquel le capteur est associé.

Elle vise en outre à créer un dispositif mettant en oeuvre un tel procédé qui soit à la fois économique, rapide, programmable.

Elle a donc pour objet un procédé d'étalonnage d'un détecteur d'images du type précité comprenant dans un boîtier une série de sources lumineuses d'éclairement d'un support d'informations à analyser, et des éléments photo-sensibles de réception de la lumière des sources correspondantes réfléchie par le support, à l'aide de moyens de compensation pour faire varier au moins l'un des paramètres comprenant la tension de sortie de chaque élément photo-sensible, et l'intensité du signal lumineux émis par la source associée, le procédé consistant à présenter au détecteur d'images une feuille uniforme de papier blanc de référence, et

a) après avoir rendu les gains des moyens de compensation identiques pour chaque élément photo-sensible, à faire varier la lumière émise par les sources de lumière en augmentant leur intensité lumineuse jusqu'à ce que tous les éléments photo-sensibles aient des réponses blanches,

b) à ce niveau de lumière fixe et pour chaque élément photo-sensible à accroître le niveau d'atténuation à l'aide desdits moyens de compensation jusqu'à ce que l'élément photo-sensible ait à nouveau une réponse noire, et à stocker cette valeur d'atténuation pour constituer une table de correction du détecteur d'images.

Selon une caractéristique préferée de l'invention le procédé consiste à régler la réponse de chaque élément photo-sensible à un gain unitaire, puis à réaliser les phases du procédé défini ci-dessus.

Selon encore une autre caractéristique préférée de l'invention le procédé consiste en outre à établir par le calcul une atténuation moyenne et/ou une intensité lumineuse moyenne en fonction de la qualité du détecteur d'images déterminée par la dispersion des réponses des éléments photo-sensibles et à procéder à l'étalonnage en changeant la valeur de l'atténuation globale et/ou de l'intensité lumineuse pour l'amener à ladite atténuation moyenne et/ou à ladite intensité lumineuse moyenne.

Selon encore d'autres caractéristiques préférées de l'invention :

- le procédé consiste à faire varier individuellement mais de valeurs différentes le gain de chaque élément photo-sensible pour constituer des atténuations virtuelles par pas de x% afin d'étalonner le détecteur d'images tout en lui conservant sa réponse uniforme;

- le procédé consiste à utiliser des niveaux de gris virtuels reconstitués pour obtenir une courbe globale de réponse du détecteur d'images, puis à assurer un lissage des points de la courbe par la méthode des moindres carrés;

- le procédé comporte une phase de calcul dynamique d'uniformité du détecteur d'images consistant à calculer les courbes des maxima tous blancs et des minima tous noirs des éléments photo-sensibles du détecteur d'images et à en déduire par lissage par la méthode des moindres carrés la courbe d'uniformité équivalente.

L'invention sera mieux comprise à la lecture de la description qui va suivre, faite en référence aux dessins annexés, donnés uniquement à titre d'exemple et sur lesquels :

- la figure 1 est un schéma synoptique d'un circuit permettant la mise en oeuvre du procédé d'étalonnage suivant l'invention ;
- la figure 2 est un diagramme représentant les réponses des éléments photo-sensibles d'un détecteur d'images à étalonner selon le procédé de l'invention ainsi que la courbe de l'atténuation destinée à assurer l'uniformisation du détecteur;

- la figure 3 montre des courbes illustrant le réglage du niveau moyen de réponse d'un détecteur d'images étalonné par le procédé suivant l'invention ; et
- la figure 4 est une vue schématique partielle d'un détecteur d'images pourvu d'une zone blanche d'étalonnage permanent; et
- la figure 5 est un organigramme montrant les opérations de filtrage et de corrélation du procédé suivant l'invention.

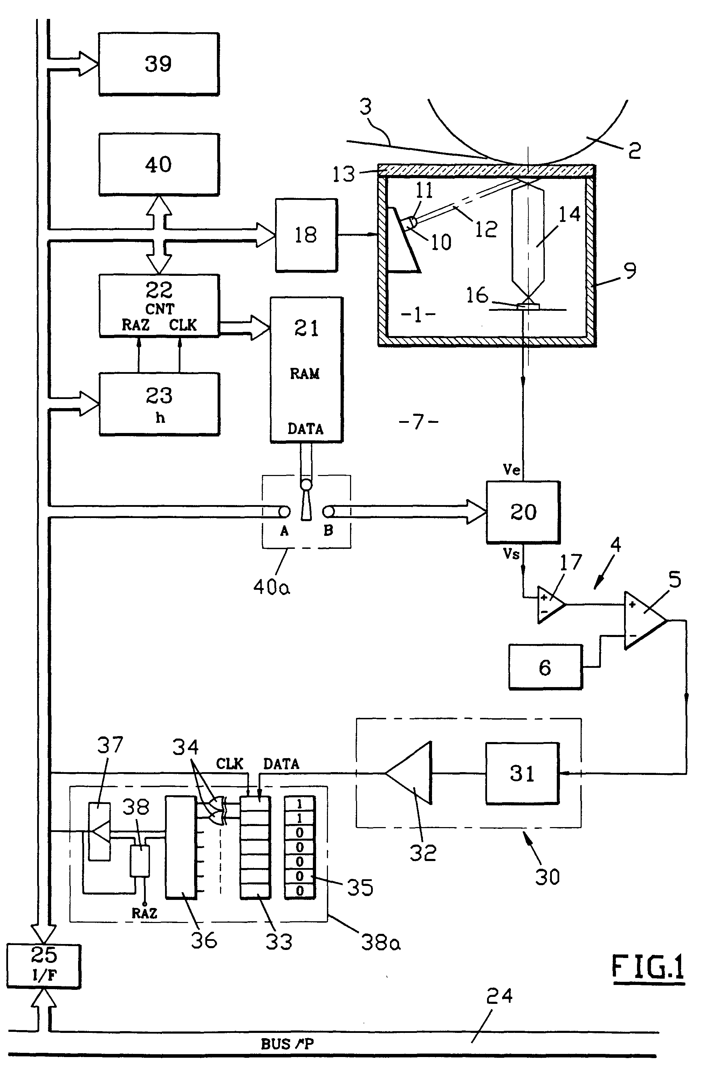

Le dispositif d'analyse de supports d'informations représenté schématiquement à la figure 1 comporte un détecteur d'images 1 disposé en regard d'un rouleau 2 d'entraînement d'un document 3 à analyser.

Le rouleau 2 est relié à un moteur électrique pas à pas non représenté destiné à permettre l'analyse du document 3 par lignes de balayage successives avec une résolution verticale qui est fonction du pas adopté pour le déplacement du rouleau 2.

Le détecteur d'images 1 est connecté à un dispositif 4 de traitement de données qui comporte entre autre un comparateur 5 recevant les signaux de sortie du détecteur d'images 1.

Le détecteur d'images 1 comporte un boîtier 9 de forme parallèlépipédique dans lequel est montée une rangée de diodes électroluminescentes 10 dont le nombre est fonction de la résolution horizontale et de l'intensité lumineuse requises.

A ces diodes 10 sont associés des organes 11 de focalisation et de filtrage de la lumière destinés à focaliser les faisceaux 12 sur une paroi transparente 13 du boîtier 9 du détecteur contre laquelle doit être appliquée la face du document 3 à analyser.

En regard de la zone de focalisation des faisceaux émis par les diodes électroluminescentes 10, sont disposés des conducteurs de lumière 14 de transmission des faisceaux 12 vers des éléments photo-sensibles 16.

Pour la suite de l'exposé, il est admis que les éléments photo-sensibles du détecteur d'images ont une réponse linéaire.

Les sources d'éclairement telles que les LED ont, elles, une réponse sensiblement logarithmique.

Les éléments photo-sensibles 16 sont connectés chacun par l'intermédiaire d'un amplificateur 17 à une entrée du comparateur 5 dont l'autre entrée est connectée à une source 6 de tension de seuil de référence Vs.

La sortie d'un circuit 18 de contrôle d'intensité lumineuse est connectée aux diodes électroluminescentes 10.

Dans EP - A - 0636995 précité on a déjà décrit un circuit de correction des signaux de sortie des éléments photo-sensibles pour compenser les différences de sensibilité des ensembles constitués par le couple diode électroluminescente-élément photo-sensible d'un détecteur d'images.

Ce circuit est interposé entre les éléments photo-sensibles 16 et l'amplificateur 17 associé au comparateur 5 du dispositif de traitement de données 4.

Il comporte essentiellement un convertisseur numérique-analogique 20 multiplieur connecté entre les éléments photo-sensibles 16 et l'amplificateur 17 précité.

A ce convertisseur numérique-analogique multiplieur est associée une mémoire 21 telle qu'une mémoire EPROM ou RAM par exemple dont l'entrée d'adresse est reliée à un compteur 22 tel qu'un compteur à 11 bits par exemple connecté à son tour à un circuit d'horloge 23 qui applique des signaux aux entrées de remise à zéro RAZ et d'horloge CLK du compteur 22.

Le circuit d'horloge 23 est connecté à un bus de microprocesseur 24 par l'intermédiaire d'un circuit de commande de bus à trois états 25 relié par un conducteur à huit lignes entre la mémoire 21 et le convertisseur analogique-numérique multiplieur 20. Le circuit 18 de contrôle des diodes électroluminescentes est également relié à ce circuit.

Comme indiqué dans la demande de brevet précitée le fonctionnement du circuit de correction met en oeuvre des moyens de détermination pour chaque pixel du détecteur d'images d'une valeur de compensation du signal de sortie de l'élément photo-sensible du pixel considéré.

On va maintenant décrire un mode de réalisation de ces moyens qui se présentent sous la forme d'un circuit additionnel connecté à la sortie du comparateur 5 comprenant un filtre 30 destiné à assurer un contrôle statistique de l'état de sortie du comparateur 5 pour chaque pixel du détecteur d'images.

Ce filtre 30 comporte un compteur 31 à 8 positions dont la sortie est connectée à un comparateur 32 des signaux de sortie du compteur pour ne délivrer à sa sortie un signal correspondant à la nature blanche de la réponse du pixel considéré que si cinq échantillons sur les huit présentés au compteur 32 se sont avérés correspondre à des réponses blanches. Le nombre de huit peut être fixé à une valeur différente ainsi d'ailleurs que la proportion d'échantillons blancs, ceci permettant de donner au filtre un caractère réglable.

Le filtre 30 est donc un intégrateur dont le rôle consiste à éliminer par exemple le bruit inhérent au capteur.

Dans le cas contraire le pixel est considéré comme délivrant une réponse noire.

La sortie du comparateur 32 est reliée à un registre à décalage 33, dont les sorties parallèles sont connectées à des entrées de portes OU-EXCLUSIF 34 qui sont reliées par leurs autres entrées à une table 35 constituée par exemple par une ROM et contenant en mémoire sous forme de masque la forme de la transition désirée.

Ce masque prédéfinissable constitue une fenêtre à nombre de bits variable dans la table des atténuations du convertisseur numérique-analogique 20, permettant de définir la forme de transition de chaque photo-détecteur ou pixel lors de son passage du blanc au noir.

Les sorties des portes 34 sont connectées à des entrées d'un sommateur de coïncidences 36 dont l'état de sortie est indicatif du nombre de coïncidences entre le registre 33 et la table 35.

La sortie du sommateur est connectée d'une part directement à l'entrée d'un comparateur 37 et d'autre part à une autre entrée de ce comparateur par l'intermédiaire d'un registre 38, dont le rôle consiste, par la mémorisation de l'état précédent, à prendre la valeur maximale de corrélation entre le contenu du registre 33 et la table 35. Les circuits 33,35,36,37 et 38 forment un circuit de corrélation 38a. La sortie du comparateur 37 est connectée à une entrée du microprocesseur matérialisé par le bus 24 lui permettant de lire le résultat des calculs des circuits de filtrage et de corrélation 30 et 38a et à une mémoire 39 ou table de correction standard d'uniformité de réponse du détecteur d'images.

La valeur écrite dans la mémoire 39 est la valeur d'atténuation fournie au convertisseur 20. L'adresse correspond au pixel traité.

La table 39 est reliée par un bus à la mémoire 21.

Elle est en outre reliée à la mémoire 21 par l'intermédiaire d'un dispositif 40 de calcul d'une valeur de correction pour l'obtention de différents paliers de réponse uniforme du détecteur d'images.

En outre, un dispositif de commutation 40a permet de relier la mémoire RAM 21 à la mémoire 39 dans le mode de chargement et de vérification de ladite RAM et de relier cette dernière au convertisseur 20 lors du mode d'exploitation du détecteur. Ce dernier mode peut fonctionner de façon autonome grâce au compteur 22 et permet une grande économie de ressources du microprocesseur.

L'agencement permet en outre au microprocesseur de venir charger à la demande toute table nécessaire à ses calculs.

La valeur d'atténuation correspondant à la corrélation maximum est stockée dans la mémoire 39 contenant la table de correction à la position correspondante du pixel traité.

L'agencement qui vient d'être décrit met en oeuvre un circuit spécifique qui peut être incorporé à chaque détecteur d'images ou bien encore associé à une unité centrale de traitement d'un équipement dont le détecteur d'images fait partie.

Il peut également être mis en oeuvre par un logiciel chargé dans le terminal de jeux ou autre appareil de traitement des données lues par le détecteur d'images.

Pour procéder à l'uniformisation d'un détecteur d'images, on effectue les opérations suivantes.

L'uniformisation est l'opération qui consiste en ce que chaque capteur individuel de pixel, fournisse la même tension de sortie pour un niveau de lumière donné.

Pour ce faire, la tension de sortie de chaque pixel est compensée par l'atténuateur programmable, pour chaque pixel, constitué par le convertisseur 20.

On commence tout d'abord par présenter au détecteur d'images un document 3 constitué d'un papier blanc uniforme ou par tout autre support uniforme de couleur blanche de référence.

On agit alors sur le circuit 18 de contrôle d'éclairement pour accroître par pas successifs ou dichotomiques l'intensité lumineuse délivrée par chaque diode électroluminescente 10 jusqu'à ce que la réponse de l'élément photo-sensible 16 correspondant devienne blanche. On dira dans la description qui va suivre que le pixel considéré devient "blanc".

Cette opération est assurée par le comparateur 5 et confirmée par le filtre 30 qui ne valide le passage au blanc d'un pixel que lorsqu'au moins cinq mesures sur huit effectuées sur ce même pixel donnent un résultat "blanc".

Les valeurs des intensités lumineuses provoquant le passage au blanc de tous les pixels sont stockées dans la mémoire du microprocesseur.

Le niveau de l'intensité lumineuse est alors placé sur le maximum trouvé pour le pixel devenu blanc le dernier. Ce niveau correspond à la situation dans laquelle tous les pixels sont blancs.

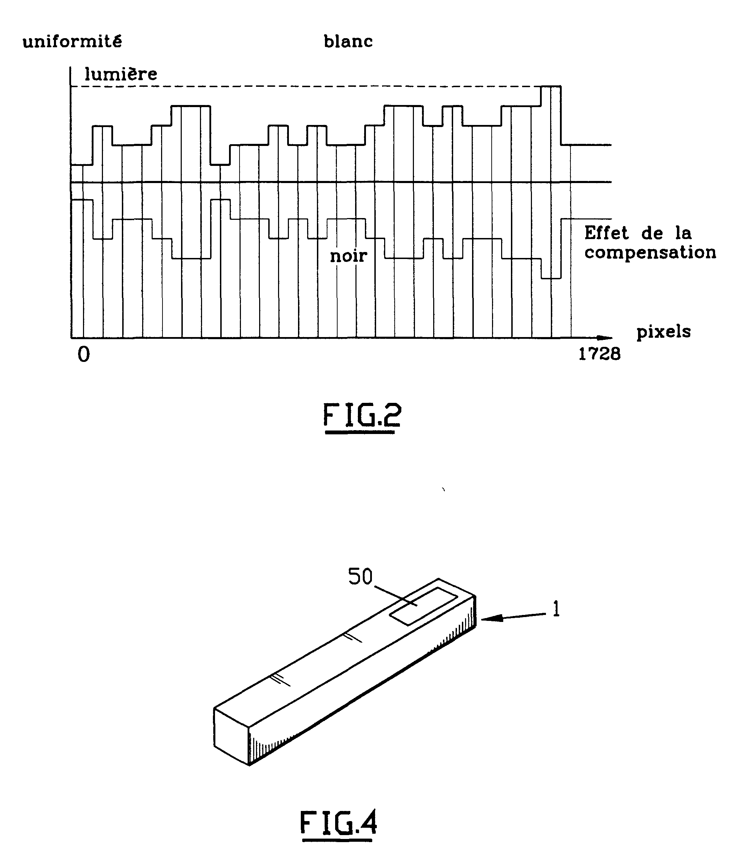

La figure 2 représente les intensités lumineuses délivrées à tous les pixels d'un détecteur d'images pour que leurs éléments photo-sensibles deviennent blancs.

Le niveau d'éclairement étant maintenu, sur le maximum trouvé, on procède pour chacun des pixels à une augmentation du niveau d'atténuation jusqu'à ce que l'élément photo-sensible 16 correspondant bascule sur une réponse noire.

Sur le graphique de la figure 2, on a également représenté en trait mixte, l'allure de l'effet de l'atténuation sur l'ensemble des pixels des photo-détecteurs pour obtenir une compensation des écarts d'intensités lumineuses nécessaires pour que les différents pixels passent au blanc et aboutir ainsi à une réponse uniforme de tous les pixels.

On agit à cet effet sur le convertisseur numérique-analogique-multiplieur 20 du circuit de la figure 1 dont la valeur de réglage sur chaque pixel du détecteur d'images détermine l'atténuation qu'il y a lieu de leur appliquer lorsqu'il est éclairé par l'intensité maximale précitée, pour que sa réponse devienne noire. Cette opération est pilotée par le microprocesseur. Elle permet de déterminer l'uniformité globale du détecteur d'images avant uniformisation en lisant simplement les valeurs de l'atténuation correspondante du convertisseur numérique-analogique 20 associées à chaque pixel.

A partir de ces valeurs est calculé le coefficient d'uniformité U selon la formule suivante :

$$U = Vmax - Vmin/Vmax + Vmin$$

Vmax étant égale à 1 volt, on peut écrire en termes d'atténuation :

$$Vmax = Amin$$

$$Vmin = Amax$$

d'où U = Amin - Amax/Amin + Amax

L'atténuation A est le rapport Vs/Ve entre la tension de sortie et la tension d'entrée Ve du convertisseur 20.

Si cette valeur excède une valeur limite, le détecteur peut être rejeté. Les valeurs d'atténuation correspondant au passage au noir de chaque pixel sont stockées dans la table de la mémoire 39 qui constitue la table de standard du détecteur d'images.

Le niveau d'atténuation globale est ensuite ajusté à un niveau moyen en fonction de la qualité du détecteur d'images déterminée par la dispersion des réponses des pixels.

Ceci permet entre autre au détecteur d'images dont le coefficient U est très bon par construction de ne pas souffrir de la dispersion de la réponse du convertisseur numérique-analogique en raison de sa non-linéarité, lorsque l'atténuation est proche de 1.

On obtient ainsi un détecteur d'images dont l'uniformité est excellente puisque le gain de tous les pixels est sensiblement identique à la dispersion du convertisseur numérique-analogique près.

Selon une variante du procédé de l'invention l'uniformisation qui vient d'être décrite peut être réalisée avec un contrôle individuel du gain de chaque pixel du détecteur d'images.

On peut effectuer non plus l'uniformisation mais l'étalonnage en faisant varier le gain de tous les pixels en même temps, ou utiliser un convertisseur analogique-numérique à gain global.

A cet effet on recherche comme précédemment le pixel le plus clair et le pixel le plus sombre.

Après avoir placé la valeur du convertisseur analogique-numérique au maximum c'est-à-dire avec un gain unitaire on procède à l'augmentation de l'intensité lumineuse d'éclairement jusqu'à ce que tous les pixels passent au blanc.

Ensuite par variation successive du convertisseur analogique-numérique sur tous les pixels on calcule l'atténuation du pixel le plus blanc Pb pour qu'il soit au même niveau que le pixel le plus noir Pn. Ceci est réalisé quand tous les pixels deviennent noirs, le pixel Pn n'ayant pas subi d'atténuation.

On vérifie si l'uniformité U de réponse des pixels du détecteur d'images est conforme à la norme.

Après uniformisation des réponses de tous les pixels du détecteur d'images on va utiliser le même convertisseur numérique-analogique 20 pour assurer un auto-étalonnage virtuel du détecteur.

L'auto-étalonnage est appelé virtuel car les niveaux de gris ne varient pas sur le papier qui reste blanc, mais grâce au gain variable du convertisseur numérique-analogique 20.

Cette opération est réalisée en pointant dans la table 39 et en appliquant des valeurs calculées et stockées dans le circuit 40 et chargées dans le convertisseur numérique-analogique 20 afin que tous les pixels du détecteur d'images aient une atténuation identique par rapport à l'atténuation uniformisée.

La valeur Umax ne doit pas dépasser ± 30%.

Ainsi, on peut reconstituer virtuellement n'importe quel niveau de gris uniforme correspondant à un pourcentage de réflexion d'un papier.

Si par exemple l'on effectue le calcul sur une plage de 50% par pas de 10%, on obtient alors une série de cinq points qui sont placés sur un graphe où figurent en abscisse le niveau de gris virtuel et en ordonnée le niveau de lumière nécessaire pour compenser l'absorption du gris.

Pour calculer le niveau de lumière, on utilise les mêmes filtres 30 et 38a que pour l'uniformité.

Par la méthode des moindres carrés un lissage est pratiqué et une courbe de lumière/niveau de gris est obtenue.

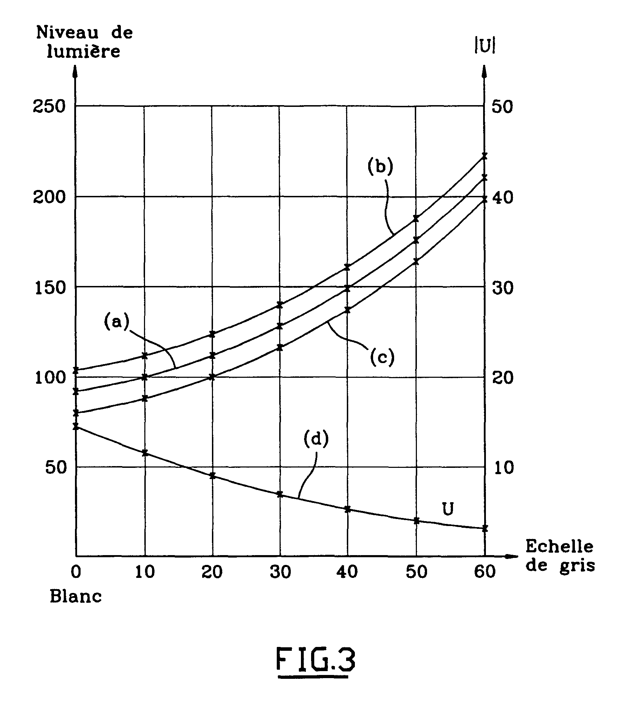

Il s'agit de la courbe (a) représentée à la figure 3. A cette courbe sont jointes une courbe (b) des maxima et une courbe (c) des minima qui correspondent respectivement aux pixels les plus blancs et aux pixels les plus noirs pour chacun des niveaux de gris considérés.

Ces deux courbes supplémentaires permettent de déterminer l'uniformité dynamique équivalente pour chaque niveau de gris correspondant.

Une courbe (d) sur la figure 3 représente cette uniformité dynamique. Elle est obtenue également après lissage par la méthode des moindres carrés et permet de visualiser clairement l'uniformité dynamique du détecteur d'images en fonction du niveau de lumière auquel il travaille.

La méthode des moindres carrés est ici utilisée pour réduire le nombre de points de mesure à calculer.

Il est courant d'obtenir après uniformisation du détecteur d'images des valeurs inférieures à 5% alors que ce même détecteur sans uniformisation présente des valeurs d'environ 30 à 40%.

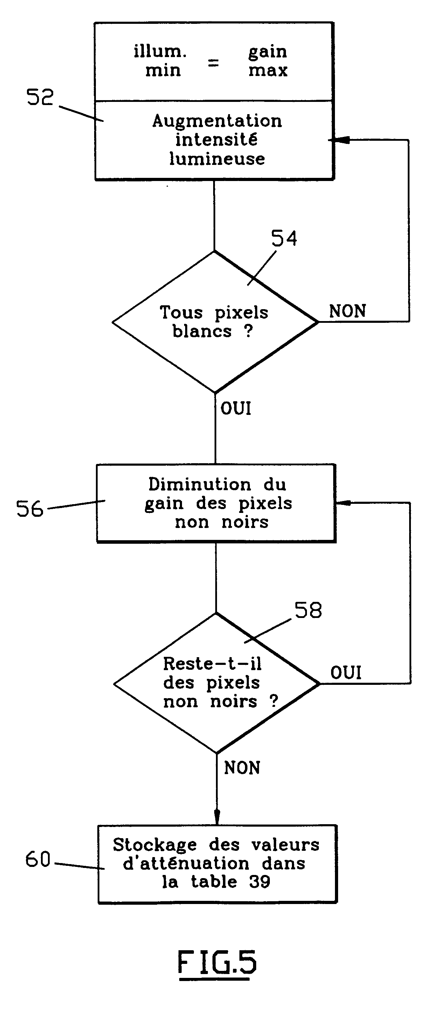

Afin de permettre l'étalonnage permanent, une zone blanche de référence est prévue à une extrémité du détecteur d'images. Cette zone blanche représentée en 50 à la figure 4, est disposée devant plusieurs dizaines de pixels du dispositif qui ne sont utilisés que pour l'étalonnage.

Elle est par exemple placée devant les pixels 1600 à 1728.

Cette zone a pour but de permettre au détecteur d'images de la scruter lorsque cela lui est nécessaire.

La table d'uniformité de ces pixels est stockée en mémoire et on peut à chaque instant recalculer la courbe dynamique de niveau de gris conforme à la Fig. 3. Ces pixels constituent des échantillons représentatifs de la réponse globale du détecteur d'images.

De plus, des tables d'étalonnage ayant été stockées pour différents pixels situés en regard de cette zone peuvent permettre de reconstituer en permanence les niveaux de gris virtuels. Il suffit alors d'indiquer au détecteur d'images à quel niveau de gris il doit opérer.

Il ne reste plus qu'à extraire de la table, les valeurs de niveau de lumière correspondant aux niveaux de gris virtuels.

Cette possibilité de niveaux de gris virtuels est intéressante lorsqu'il est nécessaire d'obtenir des caractéristiques des détecteurs d'images de tout un ensemble de terminaux de façon rigoureusement identique sur un parc en place.

Si par exemple, on injecte une valeur de 25% à tous les terminaux, ils verront tous les pixels inférieurs à 25% comme noirs et ceux supérieurs à 25% comme blancs et ceci à ± 5% près. Il faut noter que ± 5% correspondent à un papier quasiment parfait.

Sur la Fig.5, on a représenté un organigramme illustrant la mise en oeuvre des opérations successives d'éclairement de tous les pixels d'un détecteur d'images afin de déterminer les intensités lumineuses nécessaires au passage au blanc de chaque élément photo-sensible du détecteur, et de modification à partir de ces valeurs d'éclairement de l'atténuation de chaque élément photo-sensible pour compenser les différences de sensibiité à l'éclairement et obtenir une réponse uniforme de tous les éléments photosensibles.

Cet organigramme comporte une phase 52 de modification de l'intensité lumineuse des éléments photo-sensibles 16 (Fig.1) du détecteur d'images 1, une phase 54 de détermination si tous les éléments photo-sensibles ou pixels sont passés au blanc, une phase 56 de diminution du gain de chaque élément photo-sensible, après fixation du niveau d'éclairement au niveau maximum trouvé au cours de la phase 54, une phase 58 de détermination si, en résultat de la détermination du gain, tous les éléments photo-sensibles sont repassés au noir et dans l'affirmative une phase 60 de stockage des valeurs d'atténuation de tous les pixels dans la table 39 de correction standard d'uniformité de réponse du détecteur d'images.

**Revendications**

**1.** Procédé d'étalonnage d'un détecteur (1) d'images du type comprenant dans un boîtier (9) une série de sources lumineuses (10) d'éclairement d'un support d'informations (3) à analyser, et des éléments photo-sensibles (16) de réception de la lumière des sources correspondantes réfléchie par le support, à l'aide de moyens (20, 21) de compensation pour faire varier au moins l'un des paramètres comprenant la tension de sortie de chaque élément photo-sensible (16), et l'intensité du signal lumineux émis par la source (10) associée, le procédé consistant à présenter au détecteur d'images une feuille uniforme de papier blanc de référence, et

a) après avoir rendu les gains des moyens de compensation identiques pour chaque élément photo-sensible, à faire varier la lumière émise par les sources (10) de lumière en augmentant leur intensité lumineuse jusqu'à ce que tous les éléments photo-sensibles (16) aient des réponses blanches,

b) à ce niveau de lumière fixe et pour chaque élément photo-sensible (16) à accroître le niveau d'atténuation à l'aide desdits moyens (20, 21) de compensation jusqu'à ce que l'élément photo-sensible (16) ait à nouveau une réponse noire, et à stocker ces valeurs d'atténuation pour constituer une table (21) de correction du détecteur d'images.

**2.** Procédé suivant la revendication 1, **caractérisé en ce qu'**il consiste avant de faire varier la lumière à régler la réponse de chaque élément photo-sensible à un gain unitaire.

**3.** Procédé suivant la revendication 1, **caractérisé en ce que** l'accroissement du niveau d'atténuation est assuré globalement pour tous les éléments photo-sensibles du détecteur d'images.

**4.** Procédé suivant l'une des revendications 1 et 2, **caractérisé en ce que** l'accroissement du niveau d'atténuation est assuré séparément pour chaque élément photo-sensible du détecteur d'images.

**5.** Procédé suivant l'une quelconque des revendications 1 à 4, **caractérisé en ce qu'**il consiste en outre à établir par le calcul une atténuation moyenne et/ou une intensité lumineuse moyenne en fonction de la qualité du détecteur d'images déterminée par la dispersion des réponses des éléments photo-sensibles et à procéder à l'étalonnage en changeant la valeur de l'atténuation globale et/ou de l'intensité lumineuse pour l'amener à ladite atténuation moyenne et/ou à ladite intensité lumineuse moyenne.

**6.** Procédé suivant l'une quelconque des revendications 1 à 5, **caractérisé en ce qu'**il consiste en outre à uniformiser tous les éléments photo-sensibles du détecteur d'images et à appliquer à partir d'une table des valeurs d'atténuation aux moyens de compensation (20, 21) afin que tous les éléments photo-sensibles du détecteur d'images aient des valeurs identiques.

**7.** Procédé suivant la revendication 4, **caractérisé en ce qu'**il consiste à faire varier individuellement mais de valeurs différentes le gain de chaque élément photo-sensible pour constituer des atténuations virtuelles par pas de x% afin d'étalonner le détecteur d'images tout en lui conservant sa réponse uniforme.

**8.** Procédé suivant l'une quelconque des revendications 1 à 7, **caractérisé en ce qu'**il consiste à utiliser des niveaux de gris virtuels reconstitués pour obtenir une courbe globale de réponse du détecteur d'images, puis à assurer un lissage des points de la courbe par la méthode des moindres carrés.

**9.** Procédé suivant l'une quelconque des revendications 1 à 8, **caractérisé en ce qu'**il comporte une phase de calcul dynamique d'uniformité du détecteur d'images consistant à calculer les courbes (a), (b) des maxima tous blancs et des minima tous noirs des éléments photo-sensibles du détecteur d'images et à en déduire par lissage par la méthode des moindres carrés la courbe (d) d'uniformité équivalente.

**10.** Dispositif destiné à la mise en oeuvre du procédé d'étalonnage suivant l'une des revendications 1 à 5, pour l'étalonnage d'un détecteur (1) d'images du type comprenant un boîtier (9), une série de sources lumineuses (10) d'éclairement d'un support d'informations (3) à analyser et des éléments photo-sensibles (16) de réception de la lumière des sources correspondantes réfléchie par le support, le dispositif d'étalonnage comportant des moyens (20, 21) de compensation pour faire varier au moins l'un des paramètres comprenant la tension de sortie de chaque élément photo-sensible (16) et l'intensité du signal lumineux émis par la source (10) associée, en vue de l'étalonnage le support d'informations (3) étant une feuille de papier blanc et le dispositif comportant en outre :

a) des moyens pour rendre les gains des moyens de compensation identiques pour chaque élément photo-sensible (16), des moyens (5, 18, 30) pour faire varier la lumière émise par les sources (10) de lumière en augmentant leur intensité lumineuse jusqu'à ce que tous les éléments photo-sensibles (16) aient des réponses blanches,
b) des moyens pour, à ce niveau de lumière fixe et pour chaque élément photo-sensible (16), accroître le niveau d'atténuation à l'aide desdits moyens (20, 21) de compensation jusqu'à ce que l'élément photo-sensible (16) ait à nouveau une réponse noire et des moyens (21) de stockage de ces valeurs d'atténuation pour constituer une table de correction du détecteur d'images.

**11.** Dispositif suivant la revendication 10, **caractérisé en ce que** les moyens pour faire varier la lumière émise par les sources (10) de lumière comportent des moyens (30, 33) de filtrage et de validation des réponses du détecteur d'images, et des moyens (36, 37) de corrélation de ces réponses filtrées et validées avec des valeurs contenues dans une table (35) en vue de leur application aux moyens (20, 21) de compensation, associée au détecteur d'images.

**12.** Dispositif suivant la revendication 11, **caractérisé en ce qu'**il comporte en outre des moyens de mémorisation d'une table de correction standard d'uniformité de réponse du détecteur d'images reliés à la sortie desdits moyens de corrélation et auxdits moyens (20, 21) de compensation ainsi qu'un dispositif (40) d'établissement d'une valeur de correction constante pour l'obtention d'une réponse uniforme dudit détecteur d'images quelque soit le niveau d'atténuation souhaité.

**13.** Dispositif suivant l'une des revendications 11 et 12, **caractérisé en ce que** le détecteur d'images comporte une zone blanche de référence (50) disposée devant un nombre prédéterminé d'éléments photo-sensibles du détecteur d'images et permettant de lui associer une valeur représentative échantillon de l'ensemble du détecteur d'images.

**14.** Dispositif suivant l'une des revendications 11 à 13, **caractérisé en ce que** les moyens de filtrage (30) assurent la validation du passage au blanc de chaque élément photo-sensible du détecteur d'images seulement lorsqu'un nombre minimal prédéterminé de mesures sur un nombre total de mesures effectuées sur le même élément photo-sensible donnent un résultat correspondant à un passage au blanc.

**15.** Dispositif suivant l'une des revendications 11 à 14, **caractérisé en ce que** la table (35) contenant les valeurs corrélées avec les réponses filtrées et validées du détecteur d'images est constituée par une ROM contenant en mémoire sous forme de masque, la forme de la transition désirée, ledit masque prédéfinissable constituant une fenêtre à nombre de bits variable dans la table des atténuations des moyens de compensation (20, 21) permettant de définir la forme de transition de chaque photo-détecteur lors de son passage du blanc au noir.

**16.** Dispositif suivant la revendication 15, **caractérisé en ce qu'**il comporte un dispositif de commutation (40a) permettant de relier une mémoire (21) desdits moyens de compensation (20, 21) à la mémoire (39) contenant la table de correction d'uniformités de réponse du détecteur d'images, dans le mode de chargement et de vérification de ladite mémoire (21) et de relier cette dernière à un convertisseur numérique-analogique (20) desdits moyens de corrélation lors du mode d'exploitation du détecteur, un compteur (22) assurant un fonctionnement autonome de ce dernier mode.

17. Dispositif suivant l'une des revendications 11 à 16, **caractérisé en ce que** les moyens de filtrage (30), de corrélation (38a), de mémorisation (39), d'établissement d'une valeur de correction (40) sont constitués par un logiciel chargé dans un appareil de traitement des données lues par le détecteur d'images.

**Patentansprüche**

1. Verfahren zum Kalibrieren eines Bilddetektors (1) der Art, daß er in einem Gehäuse (9) eine Reihe von Lichtquellen (10) zur Beleuchtung eines abzutastenden Informationsträgers (3) und lichtempfindliche Elemente (16) zur Aufnahme des von dem Träger reflektierten Lichtes von den entsprechenden Quellen aufweist, mit Hîlfe von Kompensationsvorrichtungen (20, 21), um wenigstens einen der Parameter variieren zu lassen, welche die Ausgangsspannung jedes lichtempfindlichen Elementes (16) und die Stärke des von der zugehörigen Quelle (10) ausgesandten Lichtsignals umfassen, wobei das Verfahren daraus besteht, dem Bilddetektor ein gleichmäßig weißes Blatt Papier als Referenz vorzulegen, und

   a) nachdem die Leistungen der Kompensationsvorrichtungen für jedes lichtempfindliche Element identisch eingestellt wurden, das von den Lichtquellen (10) ausgesandte Licht variieren zu lassen, indem ihre Lichtstärke soweit erhöht wird, bis daß alle lichtempfindlichen Elemente (16) weiße Frequenzgänge aufweisen,
   b) bei dieser festen Lichtstärke und für jedes lichtempfindliche Element (16) das Dämpfungsniveau mit Hilfe der Kompensationsvorrichtungen (20, 21) soweit zu steigern, daß das lichtempfindliche Element (16) wieder einen schwarzen Frequenzgang aufweist, und diese Dämpfungswerte zu speichern, um eine Korrekturtabelle (21) für den Bilddetektor zu bilden.

2. Verfahren gemäß Anspruch 1, **dadurch gekennzeichnet, daß** es daraus besteht, den Frequenzgang jedes lichtempfindlichen Elementes auf eine Einheitsleistung einzustellen, bevor das Licht variiert wird.

3. Verfahren gemäß Anspruch 1, **dadurch gekennzeichnet, daß** die Steigerung des Dämpfungsniveaus umfassend für alle lichtempfindlichen Elemente des Bilddetektors sichergestellt wird.

4. Verfahren gemäß einem der Ansprüche 1 und 2, **dadurch gekennzeichnet, daß** die Steigerung des Dämpfungsniveaus getrennt für jedes lichtempfindliche Element des Bilddetektors sichergestellt wird.

5. Verfahren gemäß irgendeinem der Ansprüche 1 bis 4, **dadurch gekennzeichnet, daß** es außerdem daraus besteht, durch Berechnung eine mittlere Dämpfung und/oder eine mittlere Lichtstärke in Abhängigkeit von der durch die Streuung der Frequenzgänge der lichtempfindlichen Elemente festgelegten Qualität des Bilddetektors zu bestimmen und die Eichung vorzunehmen, indem der Wert der globalen Dämpfung und/oder der Lichtstärke verändert wird, um ihn auf die mittlere Dämpfung und/oder die mittlere Lichtstärke zu bringen.

6. Verfahren gemäß irgendeinem der Ansprüche 1 bis 5, **dadurch gekennzeichnet, daß** es außerdem daraus besteht, alle lichtempfindlichen Elemente des Bilddetektors zu vereinheitlichen und den Kompensationsvorrichtungen (20, 21) ausgehend von einer Tabelle Dämpfungswerte zu geben, damit alle lichtempfindlichen Elemente des Bilddetektors identische Werte aufweisen.

7. Verfahren gemäß Anspruch 4, **dadurch gekennzeichnet, daß** es daraus besteht, die Leistung jedes lichtempfindlichen Elementes einzeln, aber um unterschiedliche Werte zu verändern, um virtuelle Dämpfungen in Schritten von x% zu erzeugen, um den Bilddetektor zu eichen, wobei sein einheitlicher Freuqenzgang vollständig erhalten bleibt.

8. Verfahren gemäß irgendeinem der Ansprüche 1 bis 7, **dadurch gekennzeichnet, daß** es daraus besteht, virtuelle wiederhergestellte Grauabstufungen zu verwenden, um eine globale Frequenzgangkurve des Bilddetektors zu erhalten, und dann ein Verbinden der Punkte der Kurve durch eine ausgleichende Kurve mit dem Verfahren der kleinsten Fehlerquadrate sicherzustellen.

9. Verfahren gemäß irgendeinem der Ansprüche 1 bis 8, **dadurch gekennzeichnet, daß** es eine Phase zur dynamischen Berechnung der Einheitlichkeit des Bilddetektors umfaßt, die daraus besteht, die Kurven (a), (b) der völlig weißen Maximalwerte und der völlig schwarzen Minimalwerte der lichtempfindlichen Elemente des Bilddetektors zu berechnen und daraus durch Verbinden der Punkte mit dem Verfahren der kleinsten Fehlerquadrate die äquivalente Einheitlichkeitskurve (d) abzuleiten.

**10.** Vorrichtung, die dafür bestimmt ist, das Eichverfahren gemäß einem der Ansprüche 1 bis 5 einzusetzen für die Eichung eines Bilddetektors (1) der Art, daß er in einem Gehäuse (9) eine Reihe von Lichtquellen (10) zur Beleuchtung eines abzutastenden Informationsträgers (3) und lichtempfindliche Elemente (16) zur Aufnahme des von dem Träger reflektierten Lichtes von den entsprechenden Quellen aufweist, wobei die Eichvorrichtung Kompensationsvorrichtungen (20, 21) aufweist, um wenigstens einen der Parameter variieren zu lassen, welche die Ausgangsspannung jedes lichtempfindlichen Elementes (16) und die Stärke des von der zugehörigen Quelle (10) ausgesandten Lichtsignals umfassen, wobei der Informationsträger (3) im Hinblick auf die Eichung ein weißes Blatt Papier ist, und wobei die Vorrichtung außerdem umfaßt:

a) Vorrichtungen, um die Leistungen der Kompensationsvorrichtungen für jedes lichtempfindliche Element (16) identisch einzustellen, und Vorrichtungen (5, 18, 30), um das von den Lichtquellen (10) ausgesandte Licht variieren zu lassen, indem ihre Lichtstärke soweit erhöht wird, bis daß alle lichtempfindlichen Elemente (16) weiße Frequenzgänge aufweisen,

b) Vorrichtungen, um bei dieser festen Lichtstärke und für jedes lichtempfindliche Element (16) das Dämpfungsniveau mit Hilfe der Kompensationsvorrichtungen (20, 21) soweit zu steigern, daß das lichtempfindliche Element (16) wieder einen schwarzen Frequenzgang aufweist, und Vorrichtungen (21) zum Speichern dieser Dämpfungswerte, um eine Korrekturtabelle für den Bilddetektor zu bilden.

**11.** Vorrichtung gemäß Anspruch 10, **dadurch gekennzeichnet, daß** die Vorrichtungen zum Variieren des von den Lichtquellen (10) ausgesandten Lichtes Vorrichtungen (30, 33) zum Filtern und zur Validierung der Frequenzgänge des Bilddetektors und Vorrichtungen (36, 37) zur Korrelation dieser gefilterten und validierten Frequenzgänge mit den in einer mit dem Bilddetektor verbundenen Tabelle (35) enthaltenen Werten aufweisen, im Hinblick ihrer Anwendung auf die Kompensationsvorrichtungen (20, 21).

**12.** Vorrichtung gemäß Anspruch 11, **dadurch gekennzeichnet, daß** sie außerdem Vorrichtungen zum Speichern einer Standard-Korrekturtabelle für die Einheitlichkeit der Frequenzgänge des Bilddetektors umfaßt, welche mit dem Ausgang der Korrelationsvorrichtungen und den Kompensationsvorrichtungen (20, 21) verbunden sind, sowie eine Vorrichtung (40) zur Erstellung eines konstanten Korrekturwertes zum Erhalt eines einheitlichen Frequenzganges des Bilddetektors, unabhängig von dem gewünschten Dämpfungsniveau.

**13.** Vorrichtung gemäß einem der Ansprüche 11 und 12, **dadurch gekennzeichnet, daß** der Bilddetektor einen weißen Referenzbereich (50) aufweist, der vor einer vorbestimmten Anzahl von lichtempfindlichen Elementen des Bilddetektors angeordnet ist, und der ermöglicht, ihm einen repräsentativen Musterwert für die Gesamtheit des Bilddetektors zuzuordnen.

**14.** Vorrichtung gemäß einem der Ansprüche 11 bis 13, **dadurch gekennzeichnet, daß** die Filtervorrichtungen (30) nur dann die Validierung des Übergangs jedes lichtempfindlichen Elementes des Bilddetektors in den weißen Bereich sicherstellen, wenn eine vorbestimmte Mindestanzahl von Messungen aus einer Gesamtanzahl von Messungen, die an demselben lichtempfindlichen Element durchgeführt wurden, zu einem dem Übergang in den weißen Bereich entsprechenden Ergebnis führen.

**15.** Vorrichtung gemäß einem der Ansprüche 11 bis 14, **dadurch gekennzeichnet, daß** die Tabelle (35), welche die mit den gefilterten und validierten Frequenzgängen des Bilddetektors korrelierten Werte enthält, von einem ROM gebildet ist, welcher im Speicher die gewünschte Übergangsform in Form einer Maske aufweist, wobei die vorab definierbare Maske ein Fenster mit variabler Anzahl von Bits in der Tabelle der Dämpfungen der Kompensationsvorrichtungen (20, 21) bildet, was ermöglicht, die Übergangsform jedes Photodetektors während seines Übergangs von dem weißem in den schwarzen Bereich zu definieren.

**16.** Vorrichtung gemäß Anspruch 15, **dadurch gekennzeichnet, daß** sie eine Umschaltvorrichtung (40a) aufweist, welche ermöglicht, einen Speicher (21) der Kompensationsvorrichtungen (20, 21) mit dem Speicher (39), der die Korrekturtabelle für die Frequenzgang-Einheitlichkeiten des Bilddetektors enthält, in dem Lade- und Prüfmodus des Speichers (21) zu verbinden und diesen letzteren mit einem Digital-Analog-Umwandler (20) der Korrelationsvorrichtungen während des Auswertmodus des Detektors zu verbinden, wobei ein Zählwerk (22) einen autonomen Betrieb dieses letzten Modus sicherstellt.

**17.** Vorrichtung gemäß einem der Ansprüche 11 bis 16, **dadurch gekennzeichnet, daß** die Filtervorrichtungen (30), Korrelationsvorrichtungen (38a), Speichervorrichtungen (39) und Vorrichtungen zur Erstellung eines Korrekturwertes (40) von einer Software gebildet sind, die in eine Vorrichtung zur Verarbeitung von Daten, die von dem Bilddetektor ausgelesen werden, geladen ist.

**Claims**

1. Method for calibrating an image detector (1) of the type comprising, in a housing (9), a set of sources of light (10) for lighting a data medium (3) to be analysed, and photosensitive elements (16) to take the light from the corresponding sources reflected by the medium, by means of compensation facilities (20, 21) in order to vary at least one of the parameters comprising the output voltage of each photosensitive element (16), and the intensity of the light signal emitted by the associated source (10), the method consisting in offering up to the image detector a uniform sheet of datum white paper, and

   a) after making the gains of the compensation facilities identical for each photosensitive element, to vary the light emitted by the light sources (10) by increasing their luminous intensity until all the photosensitive elements (16) have white responses;
   b) at this fixed level of light and for each photosensitive element (16), to increase the level of attenuation by means of those compensation facilities (20, 21) until the photosensitive element (16) again has a black response, and to store these attenuation figures to form a table (21) for correcting the image detector.

2. Method according to Claim 1, **characterised by** the fact that it consists, before varying the light, in setting the response of each photosensitive element to a unit gain.

3. Method according to Claim 1, **characterised by** the fact that the increase in the level of attenuation is assured overall for all the photosensitive elements of the image detector.

4. Method according to one of the Claims 1 and 2, **characterised by** the fact that the increase in the level of attenuation is assured separately for each photosensitive clement of the image detector.

5. Method according to any one of the Claims 1 to 4, **characterised by** the fact that, in addition, it consists in establishing by calculation a mean attenuation and/or a mean intensity of light in relation to the quality of the image detector determined by the dispersion of the responses of the photosensitive elements and in proceeding with calibration while changing the value of the overall attenuation and/ or of the light intensity to bring it to the said mean attenuation and/or to the said mean light intensity.

6. Method according to any one of the Claims 1 to 5, **characterised by** the fact that, in addition, it consists in standardising all the photosensitive elements of the image detector and in applying values of attenuation, from a table, to the means of compensation (20, 21) so that all the photosensitive elements of the image detector have identical values.

7. Method according to Claim 4, **characterised by** the fact that it consists in varying individually, but for different values, the gain of each photosensitive element to constitute virtual attenuations per step of x% so as to calibrate the image detector while retaining its uniform response.

8. Method according to any one of the Claims 1 to 7, **characterised by** the fact that it consists in using virtual levels of grey reconstituted to achieve an overall response curve for the image detector and then in assuring smoothness of the points of the curve using the law of least squares.

9. Method according to any one of the Claims 1 to 8, **characterised by** the fact that it has a phase of dynamic calculation of uniformity of the image detector consisting in calculating the curves (a), (b) of the all white maxima and the all black minima of the photosensitive elements of the image detector and in deducing from them by smoothing, using the law of least squares, the equivalent uniformity curve (d).

10. A device intended for using the method of calibration according to one of the Claims 1 to 5, for calibrating an image detector (1) of the type comprising a housing (4), a series of light sources (10) for lighting a data medium (3) to be analysed, and photosensitive elements (16) which receive the light from the corresponding sources, reflected by the medium, the calibrating device having means of compensation (20, 21) in order to vary at least one of the parameters including the output voltage of each photosensitive element (16) and the intensity of the light signal emitted by the associated source (10) with a view to calibrating the data medium (3) which is a sheet of white paper, and the device comprising in addition:

   a) facilities to make the gains of the means of compensation identical for each photosensitive element (16), means (5, 18, 30) to vary the light emitted by the sources of light (10) by increasing their light intensity until all the photosensitive elements (16) have white responses;
   b) facilities, at this fixed light level and for each photosensitive element (16), to increase the level of attenuation through the said means of compensation (20, 21) until the photosensitive element (16) again has a black response, and means (21) for storing these attenuation figures to make up a table of correction for the image detector.

11. A device according to Claim 10, **characterised by** the fact that the means for varying the light emitted by the light sources (10) have means (30, 33) of filtering and validating the responses of the image detector, and means (36, 37) of correlating these filtered and validated responses with figures contained in a table (35) with a view to applying them to the means of compensation (20, 21) associated with the image detector.

12. A device according to Claim 11, **characterised by** the fact that, in addition, it has means of storing a standard correction table for uniformity of response of the image detector, connected at the outlet of the said means of correlation and to the said means of compensation (20, 21), as well as a device (40) for establishing a constant correction figure to obtain a uniform response from the said image detector whatever the required level of attenuation.

13. A device according to one of the Claims 11 and 12, **characterised by** the fact that the image detector has a datum white area (50) arranged in front of a predetermined number of photosensitive elements of the image detector and enabling it to be associated with a representative sample value of the whole image detector.

14. A device according to one of the Claims 11 to 13, **characterised by** the fact that the filtering facilities (30) ensure validation of the changeover to white of each photosensitive element of the image detector only when a predetermined minimum number of measurements out of a total number of measurements on the same photosensitive element give a result corresponding to a changeover to white.

15. A device according to one of the Claims 11 to 14, **characterised by** the fact that the table (35) containing the figures correlated with the filtered and validated responses of the image detector is set up by a ROM which, in masked form, stores the form of the required transition, the said predefinable mask constituting a window with a variable number of bits in the table of attenuations of the means of compensation (20,21), enabling the form of transition of each photo-detector to be defined at the time of its changeover from white to black.

16. A device according to Claim 15, **characterised by** the fact that it has a switching device (40a) enabling a memory (21) of the said compensation means (20, 21) to be connected to the memory (39) containing the correction table for uniformities of response of the image detector, in the mode for loading and verifying the said memory (21) and enabling the latter to be connected to a digital-analog converter (20) of the said means of correlation during the operating mode of the detector, a counter (22) ensuring independent operation of this latter mode.

17. A device according to one of the Claims 11 to 16, **characterised by** the fact that the means of filtering (30), of correlation (38a), of storing (39) and of establishing a correction figure (40), are in the form of software loaded into a data processing unit read by the image detector.

F IG.1

uniformité                    blanc

lumière

noir

Effet de la
compensation

pixels

0                                        1728

## FIG.2

50

1

## FIG.4

FIG.3

```
        ┌─────────────────────────┐
        │   illum.   =   gain     │
        │   min          max      │
   52───├─────────────────────────┤◄──────┐
        │     Augmentation        │       │
        │      intensité          │       │
        │      lumineuse          │       │
        └─────────────────────────┘       │
                     │                     │
                     │        54           │
                    ╱ ╲                     │
                   ╱   ╲    NON             │
                  ╱ Tous ╲────────────────┘
                  ╲pixels ╱
                   ╲blancs╱
                    ╲ ? ╱
                     ╲ ╱
                      │ OUI
                      │
        ┌─────────────────────────┐
        │   Diminution  du        │
   56───│   gain  des  pixels     │◄──────┐
        │     non  noirs          │       │
        └─────────────────────────┘       │
                     │                     │
                     │        58           │
                    ╱ ╲                     │
                   ╱   ╲    OUI            │
                  ╱Reste-t-il────────────┘
                  ╲des pixels╱
                   ╲non noirs╱
                    ╲  ?   ╱
                     ╲   ╱
                      │ NON
                      ▼
        ┌─────────────────────────┐
        │  Stockage  des  valeurs │
   60───│  d'atténuation  dans    │
        │     la  table  39       │
        └─────────────────────────┘
```

$$\frac{\text{illum.}}{\text{min}} = \frac{\text{gain}}{\text{max}}$$

**FIG.5**